# EUROPÄISCHE PATENTSCHRIFT

(11) **EP 1 256 756 B1**
(45) Veröffentlichungstag und Bekanntmachung des Hinweises auf die Patenterteilung: **05.04.2006**
(21) Anmeldenummer: 02405376.1
(22) Anmeldetag: 07.05.2002
(51) Int. Cl.: F16L 55/17, F16L 9/22

(54) **Reparaturrohr**
Repair pipe
Tuyau de réparation

(30) Priorität: 07.05.2001 CH 8272001
(43) Veröffentlichungstag der Anmeldung: 13.11.2002
(73) Patentinhaber: Elkuch-Ganter, Wilma, 9488 Schellenberg (LI)
(72) Erfinder: Roland, Elkuch, 9488 Schellenberg (LI)
(74) Vertreter: Hasler, Erich

(56) Entgegenhaltungen:
- EP-A- 0 499 885
- GB-A- 740 433
- US-A- 4 652 023

## Beschreibung

Die Erfindung betrifft ein Reparaturrohr mit zwei im Querschnitt vorzugsweise runden Halbschalen gleichen Durchmessers, sowie ersten Dichtungsmitteln zur Abdichtung der bei zusammengefügten Halbschalen aneinanderstossenden Ränder oder Längskanten der Halbschalen, zweiten quer zur Rohrlängsachse sich erstreckenden Dichtungsmitteln, welche wenigstens in Abstand zu den Rohrenden mindestens an der Mantelinnenfläche der Halbschalen vorgesehen sind und an die ersten Dichtungsmittel zur Abdichtung der Längskanten anstossen oder mit diesen verbunden sind.

Die EP-A-0 650 007 offenbart eine Rohrmuffe für Voll- sowie Reparaturrohre mit zwei Halbschalen. Die Rohrmuffe ist um ein Reparaturrohr legbar, wobei eine Dichtung zwischen der abzudichtenden Rohraussenwand und der Muffeninnenwand vorgesehen ist. Die Dichtung ist wenigstens einmal in Langsrichtung geteilt und hat an den Längskanten angeformte Stege mit Wulsten, welche in hinterschnittene Längsnuten der Rohrmuffe eingreifen. Die Halbschalen der Rohrmuffe werden durch Verschlusskeile in bekannter Weise miteinander verbunden. Die Verwendung der offenbarten Rohrmuffe in Verbindung mit einem Reparaturrohr ist aufwendig und kompliziert, da mehrere Teile - meist an schwer zugänglichen Orten - miteinander verbunden werden müssen. Ein weiterer Nachteil ist, dass das Reparaturrohr den umschlossenen Raum nicht vollständig gegenüber der Umgebung abdichtet.

Die GB-A-740,433 zeigt ein Reparaturrohr aus Gusseisen, welches aus zwei zylindrischen Halbschalen besteht. Die Halbschalen haben an der Innenseite in Abstand zueinander und quer zur Längserstreckung verlaufende Nuten und eine in Längsrichtung verlaufende Ausnehmung. Die Ausnehmung schliesst an die Flanschfläche der Halbrohre an. In die Nuten und Ausnehmungen ist eine Dichtung einlegbar. Die beiden Halbschalen sind im montierten Zustand durch Schrauben zusammengehalten.

Die EP-A-0 499 885 offenbart ein Rohranschlussteil für Wellrohre mit zwei Anschlussenden, von den wenigstens ein Anschlussende durch einen hohlzylindrischen Anschlussstutzen gebildet ist. Das Rohranschlussteil besteht aus zwei miteinander verbindbaren Halbschalen. In jeder Halbschale ist ein Dichtungshalbring aus elastischem Material eingelegt. In den im geschlossenen Zustand einander zugewandten Schalenwandrändern ist im Bereich der Teilungsflächen ein sich in der Längsrichtung erstreckendes Dichtungsprofil eingelegt. Bei einer axialen Ausführungsform des Rohranschlussteils sind die Halbschalen einseitig mit einem Filmscharnier verbunden. Das Rohranschlussteil für Wellrohre ist zur Verwendung als Reparaturrohr nicht geeignet, da eine ganz bestimmte Länge des undichten Rohres zuerst herausgeschnitten werden müsste, damit das Rohranschlussteil eingesetzt werden könnte. Bei bereits verlegten Rohren wäre diese mit einigem Aufwand verbunden. Des weiteren ist das vorgeschlagene Filmscharnier eine potentielle Schwachstelle, da Verrastungsmittel nur auf einer Seite der Halbschalen vorgesehen sind.

Die US 4,652,023 zeigt ein Kunststoff-Reparaturrohr aus zwei identischen Halbschalen, welche mittels Schrauben miteinander verbindbar sind. Die Halbschalen weisen an der Innenseite mehrere in Umfangsrichtung verlaufende und in Abstand voneinander angeordnete Nuten auf. An den Halbschalenrändern sind nach aussen sich erstreckende Flanschflächen angeformet, in welchen ebenfalls Längsnuten vorgesehen sind. In die Nuten ist eine Dichtung aus einem elastomeren Material einlegbar.

Die eingangs erwähnten Reparaturrohre und Anschlussteile haben alle den Nachteil, dass Schadstellen, welche sich über einen längeren Bereich erstrecken als die Länge des Reparaturrohrs ist, nicht repariert werden können.

Aufgabe der vorliegenden Erfindung ist es, ein Reparaturrohr bereitzustellen, welches kostengünstig ist und für die Reparatur von beschädigten Rohren, insbesondere von Kabelschutzrohren, besonders gut eignet ist. Ziel ist es, ein beschädigtes Rohr mit Hilfe des Reparaturrohres zu reparieren und zuverlässig gegen die Umgebung abzudichten. Ein weiteres Ziel ist es, ein Reparaturrohr bereitzustellen, welches von einer Person auch an schwer zugänglichen Stellen eingesetzt werden kann. Noch ein Ziel ist es, ein Reparaturrohr zu schaffen, mit weichem ein über eine längere Wegstrecke beschädigtes Rohr reparierbar ist. Ein anderes Ziel ist es, ein Reparaturroh bereitzustellen, welches sich gut und mit geringem Kraftaufwand verschliessen lässt.

Erfindungsgemäss wird die Aufgabe bei einem Reparaturrohr der eingangs erwähnten Art dadurch gelöst, dass an einem ersten Ende der Halbschalen eine Muffenhalbschale, einen Rohr-Muffe-Übergang bildend, angeformt ist, deren Innendurchmesser im wesentlichen dem Aussendurchmesser des anderen, zweiten Endes der Halbschalen entspricht, dass erste und zweite Dichtungsmittel im Bereich der Muffenhalbschale und zweite Dichtungsmittel in Abstand vor und nach dem Rohr-Muffe-Übergang vorgesehen sind. Das erfindungsgemässe Reparaturrohr hat den Vorteil, dass eine Mehrzahl von Reparaturrohren dicht miteinander verbindbar sind. Es lassen sich so beliebig grosse schadhafte Stellen unter Einsatz eines oder mehrerer erfindungsgemässer Rohrabschnitte reparieren. Auch ist es nicht nötig, defekte Rohrabschnitte herauszuschneiden. Dadurch, dass die ersten Dichtungsmittel auch die Verbindungsränder der Muffen abdichten und weiter an der Muffeninnenfläche zweite Dichtungsmittel vorgesehen sind, können zwei ineinandergesteckte Reparaturrohre ohne weitere Dichtungen oder Muffen dicht miteinander verbunden werden. Das Reparaturrohr hat weiter den Vorteil, dass sämtliche zur Reparatur nötigen Dichtungen bereits integriert sind. Durch das Vorsehen von Dichtungen sowohl entlang der Längskanten der Halbschalen als auch entlang der Mantelinnenfläche kann mit Hilfe des Reparaturrohrs eine schadhafte Stelle eines Rohres überbrückt und von der Umgebung zuverlässig abgedichtet werden. Es versteht sich von selbst, dass der Aussendurchmesser eines zu reparierendes Rohres ungefähr dem Innendurchmesser des aus den beiden Halbschalen gebildeten Reparaturrohrs entspricht. Obwohl die Dichtungen durch Klebemittel oder Aufspritzen an der Halbschale festgelegt sein können, sind diese vorteilhaft in eine Nut oder Rinne in den Längskanten resp. an der Mantelinnenfläche eingelegt. Zweckmässigerweise ist das Dichtungsprofil eine Schnur- oder Flachdichtung aus einem elastomeren Material. Das Dichtungsprofil kann im Querschnitt rund, oval oder rechteckförmig sein oder eine andere Querschnittsform aufweisen. Insbesondere kann das Dichtungsprofil als eine Flachdichtung ausgelegt sein, um eine breitere Dichtfläche bereitzustellen. Vorteilhaft sind die Dichtungsmittel mittels Verbindungsmittel lösbar mit den Halbschalen verbunden. Die Dichtungsmittel, insbesondere Schnur- oder Flachdichtungen, können in den Nuten unter einer gewissen durch die Elastizität des elastomeren Materials bewirkten Vorspannung aufgenommen sein, sodass sie nicht herausfallen können. Alternativ können die Verbindungsmittel an der Rückseite der Flachdichtungen angeformte Zapfen aufweisen, welche in entsprechenden in den Nuten vorgesehenen Löchern oder Aussparungen in der Halbschale einrasten können.

Vorteilhaft sind die ersten und zweiten Dichtungsmittel als ein einstückiges Dichtungsprofil ausgebildet. Dies hat den Vorteil, dass die Gefahr von undichten Stellen weitgehend eliminiert ist. Vorzugsweise sind die Längskanten der Halbschalen wenigstens im Bereich der ersten Dichtungsmittel zu einer Flanschfläche verbreitert. Dies hat den Vorteil, dass breitere Dichtflächen zur Verfügung stehen. Zweckmässigerweise sind die Dichtmittel in beiden Halbschalen symmetrisch angeordnet. Dadurch ist nur eine Ausführungsform der Dichtung erforderlich.

Obwohl die Halbschalen des Reparaturrohrs mit konventionellen Rohrschellen zusammengehalten sein können, sind vorteilhaft Verbindungsmittel zum Verbinden der beiden Halbschalen direkt an den Halbschalen angeformt. Dies hat den Vorteil, dass die Befestigungsmittel immer an Ort und Stelle sind, wenn diese benötigt werden. Vorzugsweise sind die Verbindungsmittel im Bereich der Längskanten aussen an den Halbschalen angeformt. Gemäss einer bevorzugten Ausführungsform sind an den Halbschalen an gegenüberliegenden Seiten und in Abstand voneinander zwei oder mehrere Schnappverbindungen angeformt. Schnappverbindungen resp. Schnappverschlüsse können auf unterschiedliche Arten realisiert sein. Sie haben den Vorteil, dass diese mit den zu verbindenden Teilen integral sein können. Zum Verbinden der Schnappverbindungen sind in der Regel keine Werkzeuge nötig. Grundsätzlich können die Halbschalen des erfindungsgemässen Reparaturrohrs auch durch einen dem Fachmann bekannten separaten Spannverschluss zusammengehalten sein. Einsetzbar ist beispielsweise auch ein Verschlusskeil, wie er in der eingangs erwähnten EP-A-0 650 007 offenbart ist. Anstelle einer Schnappverbindung kann an den Längskanten auch ein bajonettartiger Verschluss vorgesehen sein, wobei die beiden Halbschalen durch eine Relativverschiebung in Rohrlängsrichtung miteinander verbindbar sind.

Vorteilhaft ist die Schnappverbindung gebildet aus einem an der einen Halbschale angeformten, eine Hinterschneidung aufweisenden Zapfen und einer an der anderen Halbschale angeformten Ausnehmung, in welche der Zapfen vorzugsweise mit Vorspannung einrasten kann. Dies ist ein kostengünstig herstellbarer Verschluss. Die gegeneinander orientierten Innenflächen der Ausnehmungen können konisch zulaufend ausgebildet sein. Dadurch ist das Einführen des Zapfens in die Ausnehmung erleichtert. Alternativ kann ein tangential an den Rohrmantel angeformter Zapfen mit einer Hinterschneidung an einem an der anderen Halbschale angeformten Einrastkante oder einem Längswulst einrasten. Anstelle von mehreren Zapfen kann auch entlang der Längskante ein durchgehender Steg mit einer Hinterschneidung angeformt sein, welcher mit einer durchgehenden Einrastkante oder einem Längswulst unter Bildung einer formschlüssigen Verbindung auf der ganzen Länge zusammenwirken kann. Vorzugsweise ist die Hinterschneidung der Zapfen nach innen orientiert Dadurch können die Ränder der Halbschalen gut abgedichtet werden.

In einer vorteilhaften Weiterentwicklung sind die Einrastmittel an radial von den Halbschalen abstehenden Stegen ausgebildet oder angeformt. Diese Stege können bündig mit der Trennfläche der beiden Halbschalen sein. Von den Stegen können die Zapfen der Schnappverbindung ungefähr senkrecht abstehen. Die Stege können mittels Verstärkungsrippen mit dem Rohrmantel verbunden sein. Dadurch, dass Verbindungsmittel in Rohrlängsrichtung wenigstens im Bereich der zweiten Dichtungsmittel vorgesehen sind, erreicht man eine gute Dichtigkeit des Reparaturrohres. Versuche haben gezeigt, dass das Reparaturrohr auch einen Überdruck von 0.5 bar aushalten kann.

Eine besonders bevorzugte Ausführungsvariante zeichnet sich dadurch aus, dass die beiden Halbschalen des Reparaturrohrs durch wenigstens ein Scharnier zusammengehalten sind. Dies erleichtert die Montage des Reparaturrohres ganz wesentlich, da nicht beide Halbschalen gleichzeitig gehalten werden müssen. Das Scharnier hat zudem den Vorteil, dass die männlichen und weiblichen Teile der Schnappverbindung genau aufeinander passen. Gemäss einer bevorzugten Ausführungsform verläuft die durch das Scharnier definierte Schowenk-oder Faltachse axial zur Rohrlängsachse und in Abstand zur Mantelfläche. Dies hat den Vorteil, dass durch den vergrösserten Schwenkradius ein verlängerter Hebel realisiert ist Das erfindungsgemässe Rohr kann deshalhauch um beschädigte oder leicht verbogene, defekte Rohrabschnitte mit wenig Kraftaufwand gelegt werden. Ausserdem lässt sich eine Schnappverbindung scharnierseitig leichter realisieren, wenn die Schwenkachse des Scharniers sich in Abstand zu den Halbschalenrändem und gegebenenfalls einer an die Halbschale angeformten Muffenhalbschale verläuft. Dies erleichtert auch das Vorsehen von lösbaren Verrastungsmittel auf der Seite des oder der Scharniere. Zweckmässigerweise ist das Scharnier durch zwei radial abstehende Stege gebildet, deren Enden, z.B. durch ein Filmscharnier, miteinander verbunden sind. Ein Filmscharnier ist kostengünstig herstellbar. Vorteilhaft ist die Schnappverbindung in den Scharnieren integriert. Dies hat den Vorteil, dass Scharnier und Verschluss nur wenig Platz benötigen. Eine zweckmässige zweiteilige Schnappverbindung umfasst einen vom Steg der einen Halbschale senkrecht abstehenden Zapfen und eine am Steg der anderen Halbschalen ausgebildete Einrastkante.

Vorzugsweise entspricht der Abstand zwischen der Schwenkachse und den Halbschenlängskanten ≥ dem 0.1-fachen Durchmesser der Halbschalen, vorzugsweise ≥ dem 0.2-fachen Durchmesser der Halbschalen, und ganz besonders bevorzugt ≥ dem 0.25- fachen Durchmesser der Halbschalen entspricht.
Eine bevorzugte Ausführungsform des Reparaturrohrs hat an einem Ende des aus zwei Halbschalen bestehenden Reparaturrohres eine aus zwei Muffenhalbschalen gebildete Muffe angeformt, deren Innendurchmesser dem Aussendurchmesser des anderen Ende des Reparaturrohrabschnittes entspricht. Das Vorsehen einer Muffe hat den grossen Vorteil, dass mehrere Reparaturrohre zu einem längeren Reparaturrohrabschnitt zusammengefügt werden können. Vorteilhaft sind die ersten und zweiten Dichtungsmittel auch im Bereich der Muffe vorgesehen. Dadurch können zwei oder mehrere ineinandergesteckte Reparaturrohre dicht miteinander verbunden werden.

Vorteilhaft sind die in den Längskanten vorgesehenen Nuten der beiden Halbschalen versetzt zueinander angeordnet Dies hat den Vorteil, dass die in den Nuten eingelegten Dichtungen im Zusammenwirken mit den Längskanten der anderen Halbschale in radialer Richtung zwei hintereinander angeordnete Dichtstellen bilden.

Ausführungsbeispiele der Erfindung werden nun unter Bezugnahme auf die Figuren näher beschrieben. Es zeigt:
- Figur 1:: ein erfindungsgemässes Reparaturrohr aus zwei Halbschalen mit Dichtungen im aufgeklappten Zustand und in perspektivischer Ansicht;
- Figur 2:: ausschnittsweise das eine Rohrende des Reparaturrohrs (ohne Dichtung) von Fig.1 mit angeformter Muffe in vergrösserter Darstellung und in perspektivischer Darstellung;
- Figur 3:: ausschnittsweise ein im Bereich der Muffe vorgesehenes Scharnier mit integrierten Schliessmitteln ebenfalls in perspektivischer Darstellung;
- Figur 4:: in Draufsicht die beiden Halbschalen des Reparaturrohrs von Fig. 1
- Figur 5:: in Vorderansicht, teilweise im Schnitt, das Reparaturrohr im aufgeklappten Zustand (untere Bildhälfte) und im zusammengeklappten Zustand (rechte Bildhälfte);
- Figur 6:: in Vorderansicht das um ein defektes Rohr gelegte Reparaturrohr (linke Bildhälfte), sowie zwei gestapelte Reparaturhalbschalen (rechte Bildhälfte);
- Figur 7:: in perspektivischer Ansicht eine Dichtung zur Abdichtung der Halbschalen; und

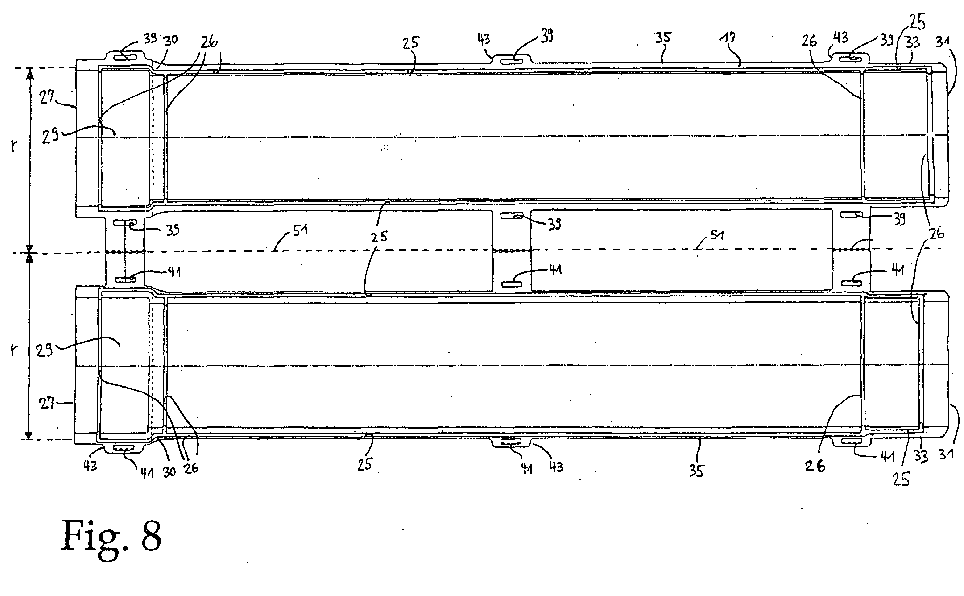

- Figur 8:: ein weiteres Ausführungsbeispiel mit mehreren in axialer Richtung an den Mantelinnenflächen der Halbschalen vorgesehenen Dichtungshalbringen.

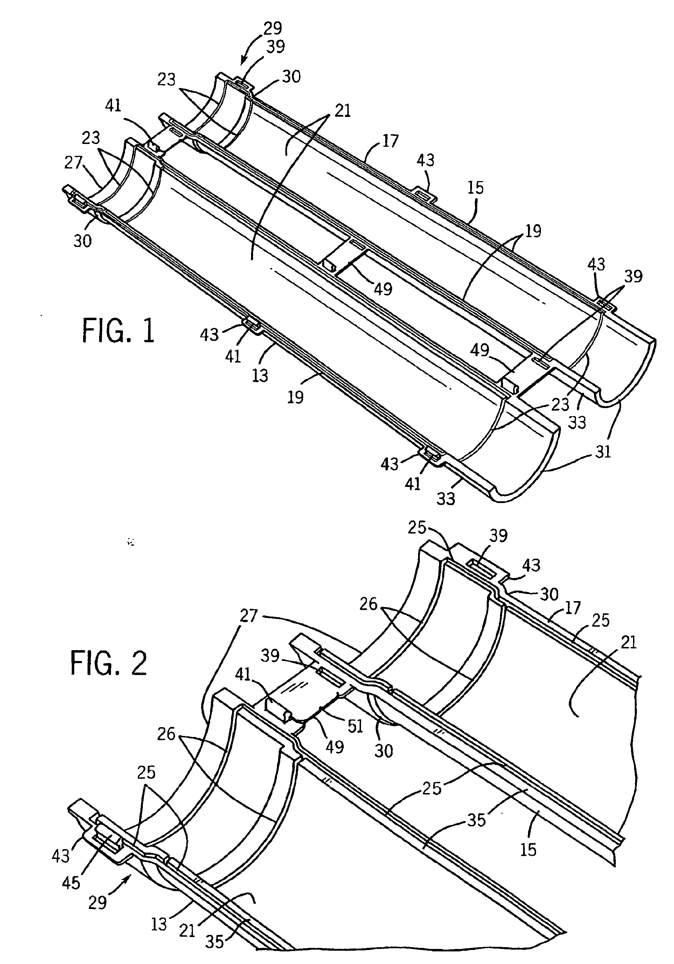

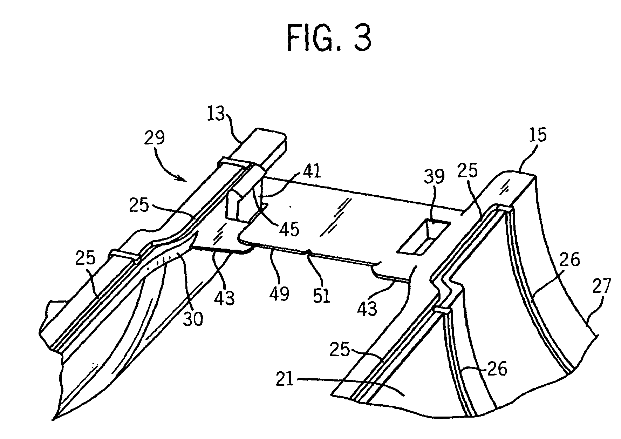

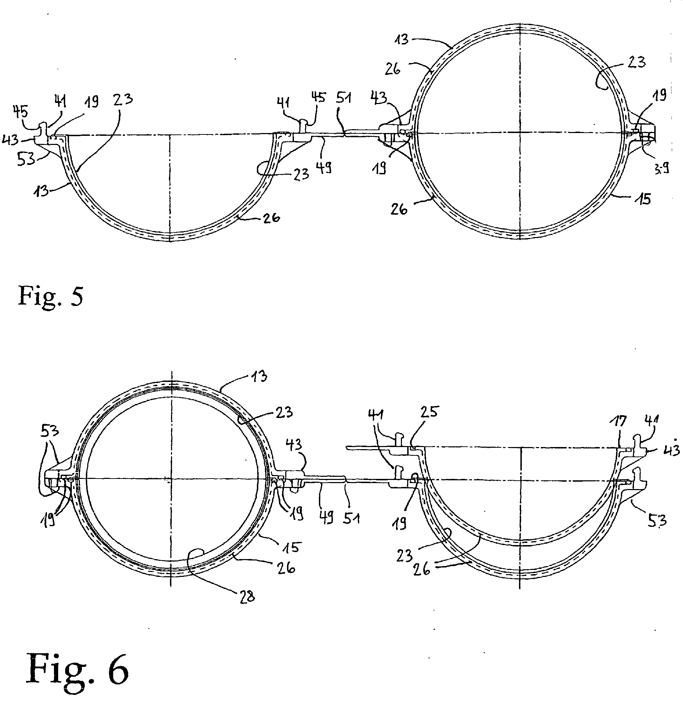

Die Figuren 1 bis 7 zeigen ein erfindungsgemässes Reparaturrohr 11, welches aus den Halbschalen 13 und 15 zusammensetzbar ist. Die Halbschalen 13,15 haben entlang der Längskanten 17 erste Dichtungsmittel 19 angeordnet, welche die Halbschalen 13,15, wenn diese zusammengefügt sind, dicht zu einem Rohr 11 verschliessen. In der Mantelinnenfläche 21 sind zweite Dichtmittel 23 vorgesehen, welche mit den ersten Dichtungmitteln 19 der einander gegenüberliegenden Längskanten 17 vorzugsweise einstückig verbunden sind. Gemäss der bevorzugten Ausführungsform sind die Dichtungsmittel aus einem elastomeren Material (Kautschukverbindung) hergestellte einstückige Schnur- oder Flachdichtungen. Die ersten Dichtungsmittel 19 sind in Nuten 25 in den Längskanten 17 (Fig. 2 und 3) eingelegt und überragen diese um ein bestimmtes Stück, sodass die Nahtstelle der zusammengefügten Halbschalen 13,15 wenigstens flüssigkeitsdicht ist. Die zweiten Dichtungsmittel 23 sind in Nuten 26 (Fig. 2 und 3) angeordnet und dichten die Reparaturschalen in Umfangsrichtung gegen ein zu reparierende Rohr 28 ab (Fig.6) . Die Nuten 25 und 26 stehen miteinander in Verbindung, sodass einstückige Dichtungen verwendbar sind und eine nahtlose Abdichtung realisierbar ist.

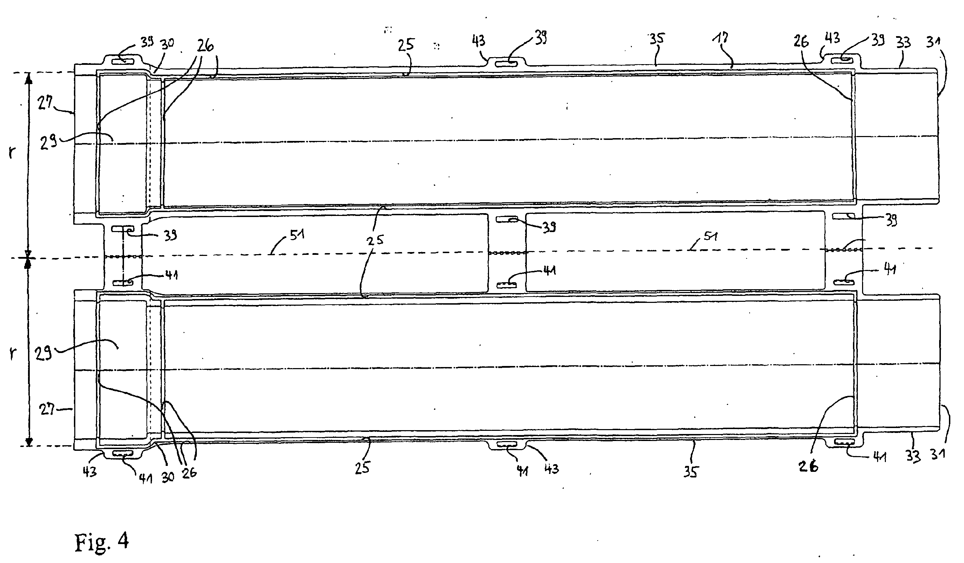

Gemäss einer bevorzugten Ausführungsform ist das eine Ende 27 des Reparaturrohres 11 als Muffe 29 ausgebildet mit einem dem Aussendurchmesser des Reparaturrohres entsprechenden Innendurchmesser (Fig. 2 und 3). Das andere Ende 31 des Reparaturrohres 11 ist ein der Länge der Muffe ungefähr entsprechender Rohrabschnitt 33, welcher formschlüssig in die Muffe 29 passt (Fig. 4). Die Muffe 29 des zusammengesetzten Rohres ist aus zwei Muffenhalbschalen gebildet und direkt an die Halbschalen 13,15 angeformt. Durch das Vorsehen einer Muffe 29 an einem Ende des Reparaturrohres können mehrere Reparaturrohre 11 zu einem längeren Reparaturrohrverband mit mehreren einzelnen Reparaturrohren 11 verbunden werden. Nuten 25,26 sowie Dichtungsmittel 19,23 sind auch im Bereich der Muffe 29 vorgesehen, sodass zwei inandergesteckte Reparaturrohre in Rohrlängsrichtung dicht miteinander verbindbar sind. Zweite Dichtungsmittel 23 sind in vorzugsweise kleinem Abstand vor und nach dem Rohr-Muffe-Übergang 30 an der Rohrinnenfläche 21 vorgesehen.

Die Längskanten 17 der Halbschalen 13,15 sind im Bereich der Nuten 25 resp. bis zum Rohrabschnitt 33 zu einer Flanschfläche 35 verbreitert. Die Flanschfläche 35 erstreckt sich vom Rohrabschnitt 33 bis knapp zum anderen Rohrende 27. Die Nuten 25 in den Längskanten 17 der beiden Halbschalen 13,15 sind in der Flanschfläche 35 vorzugsweise versetzt zueinander angeordnet (Fig. 3). Die Nut 25 in der Halbschale 13 ist näher zur Rohraussenfläche, diejenige der Halbschale 15 näher zur Rohrinnenfläche angeordnet. Sind die beiden Halbschalen 13,15 zusammengefügt, so ergeben sich radial zwei hintereinander angeordnete Dichtstellen. Dies sorgt für eine zuverlässige Dichtung entlang der Längskanten 17.

Eine Weiterentwicklung sieht vor, dass die ersten Dichtungsmittel auch die Kanten des Rohrabschnitts 33 bis nahe ans Rohrende 31 abdichten. Zweite Dichtungsmittel 23 können in kurzem Abstand je vor dem Rohrabschnitt 33 und zum Rohrende 31 paarweise vorgesehen sein.

Die Halbschalen 13,15 sind durch eine Mehrzahl von in Abstand voneinander angeordneten Schnappverbindungen 37 oder -verschlüssen miteinander verbindbar. Die Schnappverbindungen 37 sind gebildet durch an die Halbschalen angeformte Ausnehmungen 39 und Zapfen 41, welche miteinander unter Bildung einer lösbaren Schnappverbindung zusammenwirken können. Grundsätzlich kann die Schnappverbindung auf verschiedene Arten verwirklicht sein. Gemäss dem gezeigten Ausführungsbeispiel sind an die Halbschalen 13,15 radial abstehende Laschen oder Stege 43 angeformt, welche bündig mit den Längskanten 17 resp. Flanschflächen 35 sind. An der einen Halbschale 13 sind die Zapfen 41 vorgesehen, welche von den Stegen 43 ungefähr tangential zum Rohrradius verlaufend abstehen resp. senkrecht zu den Stegen 43 sind. An der anderen Halbschale 15 sind die Ausnehmungen 39 vorgesehen, welche als Schlitze in den Stegen 43 ausgebildet sind. Die Zapfen 41 besitzen je eine vorzugsweise nach aussen gerichtete Hinterschneidung 45, welche an einer Einrastkante der Ausnehmung 39 einrasten kann. Die Zapfen 41 und Ausnehmungen 39 sind so relativ zueinander ausgerichtet, dass die Zapfen 41 unter einer bestimmten Vorspannung an einer Einrastkante der Ausnehmungen 39 einrasten. Dies hat den Vorteil, dass die einmal verbundenen Halbschalen 13,15 nicht mehr von selbst aufspringen können. Zum leichteren Einführen ist der Kopf 47 der Zapfen 41 im Querschnitt konisch oder spitz zulaufend ausgebildet. Es ist denkbar, dass die Halbschalen 13,15 identisch sind, d.h. dass jede Halbschale 13,15 auf einer Seite Zapfen 41 und auf der anderen Seite Schlitze 39 aufweist. Dies hat den Vorteil, dass nur eine Spritzgussform für die Herstellung der Halbschalen 13,15 nötig ist.

Gemäss einer besonders bevorzugten Ausführungsform sind zweite Dichtungsmittel 23 in Rohrlängsrichtung sowohl in kurzem Abstand vor dem Rohr-Muffe- resp. Halbschale-Muffe-Übergang 30 als auch in kurzem Abstand zum muffenseitigen Rohrende 27 vorgesehen. Zur Erreichung einer guten Dichtigkeit können Schnappverbindungen 37 in axialer Richtung an der gleichen Stelle wie die zweiten Dichtungsmittel 23 vorgesehen sein (in den Figuren 1 bis 7 nicht eingezeichnet). Durch das Vorsehen von Schnappverbindungen angrenzend zu den zweiten Dichtungsmitteln kann an diesen Stellen ein hoher Anpressdruck der Dichtungen erreicht werden. Eine andere Weiterentwicklung sieht vor, dass zweite Dichtungsmittel 23 in Rohrlängsrichtung sowohl in kurzem Abstand vor dem Rohrabschnitt 33 als auch in kurzem Abstand zum Rohrende 31 vorgesehen. Dies hat den Vorteil, dass an der Verbindungsstelle von zwei Reparaturrohren 11 auf jeder Rohrseite insgesamt je 3 Schnappverbindungen in kurzem Abstand hintereinander angeordnet sind.

Zur Erleichterung der Montage des Reparaturrohrs sind die Halbschalen 13,15 auf einer Seite mit Scharnieren 49 miteinander verbunden. Obwohl die Scharniere 49 grundsätzlich als separate Teile ausgebildet sein können, sind diese vorteilhaft an den Stegen 43 angeformt resp. mit diesen integral. Wie insbesondere aus Figur 3 ersichtlich, sind die Scharniere 49 Verlängerungen der Stege 43. In der Faltachse 51 (Fig. 4) sind die Verlängerungen in der Materialstärke verdünnt, sodass ein Filmscharnier gebildet ist. Die Scharniere 49 haben den Vorteil, dass die Zapfen 41 und Ausnehmungen 39 der Schnappverbindungen 37 gegeneinander ausgerichtet sind.

Zur Verstärkung sind zwischen den Stegen 43 und der Rohraussenfläche Streben 53 angeformt (s. Fig. 5 und 6). Die Streben 53 können auch durchgehend sein. Sie verleihen den Stegen 43 Formstabilität. Die Streben können an allen oder nur an einem Teil der Stege vorgesehen sein.

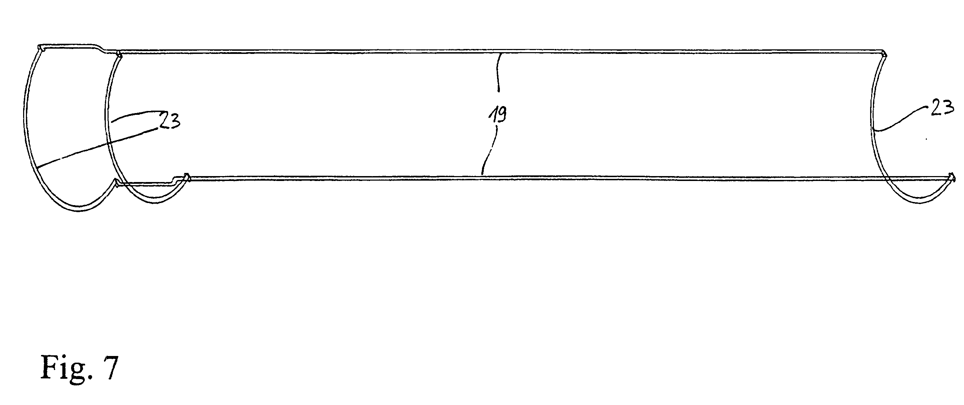

Die Schnappverbindungen 37 sind vorzugsweise im Bereich der transversalen zweiten Dichtungsmittel 23 vorgesehen, da an diesen Stellen ein grosser Anpressdruck erzeugbar ist. Dies hat den Vorteil, dass eine gute und dauerhafte Abdichtung zwischen dem defekten Rohr 28 und dem Reparaturrohr 11 möglich ist. Denkbar ist, an der Rohrinnenfläche mehrere in Abstand voneinander angeordnete zweite Dichtungsmittel vorzusehen. Des weiteren können zwei, drei oder mehr Schnappverbindungen entlang eines Reparaturrohres vorgesehen sein. Eine einstückige Dichtung 19,23 zum Einlegen in die Nuten 25,26 ist in der Figur 7 in perspektivischer Ansicht dargestellt.

Das erfindungsgemässe Reparaturrohr 11 wird vorzugsweise zur Abdichtung von defekten im Erdreich verlegten Kabelschutzrohren eingesetzt. Wird ein Kabelschutzrohr z.B. bei Bauarbeiten verletzt, so muss die schadhafte Stelle repariert werden und zwar so, dass kein Wasser in das Kabelschutzrohr eindringen kann. Mit dem erfindungsgemässen Reparaturrohr ist die Reparatur besonders einfach, weil dies durch eine einzelne Person und ohne weitere Werkzeuge durchführbar ist. Da sämtliche zur Reparatur nötigen Teile im Reparaturrohr integriert sind, kann nichts vergessen werden, und es sind vor Ort immer alle zur Reparatur erforderlichen Komponenten vorhanden. Ausserdem können die geöffneten Halbschalen auch bei beengten Platzverhältnissen, wie dies normalerweise in Baugruben der Fall ist, durch eine Person problemlos um das defekte Rohr gelegt und zusammengefügt werden. Da der Schwenkradius r der verbundenen Halbschalen (s. Fig. 4) grösser als der Halbschalendurchmesser ist, können die Halbschalen selbst bei einem etwas verbogenen Rohr gut an das zu reparierende Rohr gelegt werden und die Schnappverbindungsteile kommen so nahe zueinander zu liegen, dass diese mit einer Zange gefasst und miteinander verrastet werden können.

Das Reparaturrohr 11 ist im aufgeklappten Zustand (s. Figur 6) stapelbar und nimmt nur wenig Platz in Anspruch. Durch die Möglichkeit, mehrere Reparaturrohre 11 dicht miteinander verbinden zu können, sind Rohre mit schadhaften Stellen beliebiger Länge reparierbar.

Das Ausführungsbeispiel gemäss Figur 7 unterscheidet sich vom ersten darin, dass am Rohrende 31 in Abstand voneinander angeordnete zweite Dichtungsmittel 23 vorgesehen sind. Durch das Vorsehen von mehreren Dichtungen 23 an der Mantelinnenfläche 21 kann die Dichtigkeit weiter verbessert werden.

### Ausführungsbeispiel:

Das Reparaturrohr ist zweckmässigerweise zwischen ungefähr 80 und 120 cm lang, kann jedoch auch kürzer oder länger sein. Die am Rohr angeformte Muffe besitzt vorteilhaft eine Länge zwischen 8 und 15 cm. Die zweiten Dichtungsmittel sind an den gegenüberliegenden Rohrenden 27 und 31 vorzugsweise paarweise in einem axialen Abstand zwischen 4 und 12 cm angeordnet. In gleichem Abstand sind die Schnappverbindungen am muffenseitigen Rohrende angeordnet. Das Reparaturrohr besteht aus Kunststoff. Geeignete Kunststoffe sind Polyethylen, Polypropylen, rezyklierte Kunststoffe. Vorteilhaft sind entlang eines Reparaturrohres beidseitig 3 oder 5 Schnappverbindungen, vorzugsweise 6 Schnappverbindungen, in Abstand voneinander angeordnet. Der Abstand der Schnappverbindungen voneinander beträgt vorzugsweise zwischen 15 und 30 cm, vorzugsweise zwischen 20 und 25 cm. An der Muffe beträgt der axiale Abstand der Schnappverbindungen jedoch weniger, nämlich 4 bis 12 cm. Der Schwenkradius r der miteinander mittels eines Filmscharniers verbundenen Halbschalen beträgt vorzugsweise zwischen 14 und 16 cm bei einem Durchmesser der Halbschalen von 12 cm.

Zusammenfassend kann festgehalten werden, dass das erfindungsgemässe Reparaturrohr den Vorteil hat, dass ein Ende des Reparaturrohrs als Muffe 29 ausgebildet, und das andere Ende des Reparaturrohrs ein in die Muffe passender Rohrabschnitt 33 ist. Dadurch lassen sich für die Reparatur längerer undichter Stellen mehrere Reparaturrohre 11 dicht miteinander verbinden. Durch den Verlauf der Schwenkachse der mittels eines Filmscharniers verbundenen Halbschalen in Abstand zu den Halbschalen kann das Reparaturrohr auch leicht um beschädigte oder leicht verbogene Rohrabschnitte gelegt werden.

### Legende:

- 11: Reparaturrohr
- 13,15: Halbschalen
- 17: Längskanten der Halbschalen
- 19: erste Dichtungsmittel der Längskanten
- 21: Mantelinnenfläche
- 23: zweite Dichtungsmittel der Mantelinnenfläche
- 25: Nuten in den Längskanten
- 26: Nuten in der Rohrinnenfläche
- 27: erstes Ende des Reparaturrohres
- 28: zu reparierendes Rohr
- 29: Muffe bzw. Muffenhalbschalen
- 30: Rohr-Muffe-Übergang bzw. Rohr- Muffenhalbschale- Übergang
- 31: zweites Ende des Reparaturrohres
- 33: Rohrabschnitt
- 35: Flanschfläche
- 37: Schnappverbindungen
- 39: Ausnehmung für Zapfen
- 41: Zapfen
- 43: radial angeformte Stege
- 45: Hinterschneidung des Zapfens 41
- 47: Kopf des Zapfens 41
- 49: Scharnier
- 51: Faltachse der Scharniere
- 53: Streben

## Patentansprüche

1. Reparaturrohr mit
- zwei im Querschnitt vorzugsweise runden Halbschalen (13,15) gleichen Durchmessers, sowie
- ersten Dichtungsmitteln (19) zur Abdichtung der bei zusammengefügten Halbschalen (13,15) aneinanderstossenden Ränder oder Längskanten (17) der Halbschalen;
- zweiten quer zur Rohrlängsachse sich erstreckenden Dichtungsmitteln (23), welche wenigstens in Abstand zu den Rohrenden (27,31) mindestens an der Mantelinnenfläche (21) der Halbschalen (13,15) vorgesehen sind und an die ersten Dichtungsmittel (19) zur Abdichtung der Längskanten (17) anstossen oder mit diesen verbunden sind;
**dadurch gekennzeichnet,**
**dass** an einem ersten Ende (27) der Halbschalen (13,15) eine Muffenhalbschale (29), einen Rohr-Muffe-Übergang (30) bildend, angeformt ist, deren Innendurchmesser im wesentlichen dem Aussendurchmesser des anderen, zweiten Endes (33) der Halbschalen (13,15) entspricht, dass erste und zweite Dichtungsmittel (19,23) im Bereich der Muffenhalbschale (29) vorgesehen sind; und dass zweite Dichtungsmittel (19,23) in Abstand vor und nach dem Rohr-Muffe-Übergang (30) vorgesehen sind.

2. Reparaturrohr nach Anspruch 1, **dadurch gekennzeichnet, dass** die ersten und zweiten Dichtungsmittel (19,23) ein vorzugsweise einstückiges Dichtungsprofil sind.

3. Reparaturrohr nach Anspruch 1, **dadurch gekennzeichnet, dass** die Dichtungsmittel (19,23) in eine Nut (25,26) in den Längskanten (17) resp. an der Mantelinnenfläche (21) eingelegt ist.

4. Reparaturrohr nach Anspruch 2 oder 3, **dadurch gekennzeichnet**, das Dichtungsprofil im Querschnitt rund, oval oder rechteckförmig ist.

5. Reparaturrohr nach einem der Ansprüche 1 bis 4, **dadurch gekennzeichnet, dass** die Längskanten (17) der Halbschalen (13,15) im Bereich der ersten Dichtungsmittel (19) wenigstens teilweise zu einer Flanschfläche (35) verbreitert sind.

6. Reparaturrohr nach einem der Ansprüche 1 bis 5, **dadurch gekennzeichnet, dass** wenigsten einseitig Verbindungsmittel (37) zum Verbinden der beiden Halbschalen (13,15) am Reparaturrohr (11) vorgesehen oder mit diesem integral sind.

7. Reparaturrohr nach Anspruch 6, **dadurch gekennzeichnet, dass** die Verbindungsmittel (37) beidseitig an den Halbschalen (13,15) einander gegenüberliegend und in Rohrlängsrichtung in Abstand voneinander angeformt sind.

8. Reparaturrohr nach Anspruch 6 oder 7, **dadurch gekennzeichnet, dass** die Verbindungsmittel Einrastmittel bzw. Schnappverbindungen (37) sind.

9. Reparaturrohr nach Anspruch 8, **dadurch gekennzeichnet, dass** die Schnappverbindung (37) gebildet ist aus einem an der einen Halbschale (13) angeformten, eine Hinterschneidung (45) aufweisenden Zapfen (41) und einer an der an der anderen Halbschale (15) angeformten Ausnehmung (39) oder Einrastkante, in welche der Zapfen (41) vorzugsweise mit Vorspannung einrasten kann.

10. Reparaturrohr nach Anspruch 9, **dadurch gekennzeichnet, dass** die Hinterschneidung (45) der Zapfen (41) nach innen orientiert ist.

11. Reparaturrohr nach einem der Ansprüche 8 bis 10, **dadurch gekennzeichnet, dass** die Einrastmittel an radial von den Halbschalen (13,15) abstehenden Stegen (43) ausgebildet oder angeformt sind.

12. Reparaturrohr nach einem der Ansprüche 8 bis 11, **dadurch gekennzeichnet, dass** Verbindungsmittel (37) in Rohrlängsrichtung wenigstens im Bereich der zweiten Dichtungsmittel (23) vorgesehen sind.

13. Reparaturrohr nach einem der Ansprüche 1 bis 12, **dadurch gekennzeichnet, dass** die beiden Halbschalen (13,15) des Reparaturrohrs durch wenigstens ein Scharnier (49) zusammengehalten sind.

14. Reparaturrohr nach Anspruch 13, **dadurch gekennzeichnet, dass** das Scharnier (49) durch zwei radial von den Halbschalen (13,15) abstehende Stege (43) gebildet ist, deren Enden miteinander verbunden sind.

15. Reparaturrohr nach Anspruch 12 oder 13, **dadurch gekennzeichnet, dass** die scharnierseitigen Verbindungsmittel, z.B. Schnappverschlüsse oder Einrastmittel, zum Verbinden der Halbschalen (13,15) in den Scharnieren (49) integriert sind.

16. Reparaturrohr nach einem der Ansprüche 1 bis 15, **dadurch gekennzeichnet, dass** die durch dass Scharnier definierte Schwenkachse (51) axial zur Rohrlängsachse und in Abstand zu den Längskanten der Halbschalen (13,15) verläuft.

17. Reparaturrohr nach einem der Ansprüche 1 bis 16, **dadurch gekennzeichnet, dass** der Abstand zwischen der Schwenkachse (51) und den Halbschalenrändern ≥ dem 0.1-fachen Durchmesser der Halbschalen, vorzugsweise ≥ dem 0.2-fachen Durchmesser der Halbschalen, und ganz besonders bevorzugt ≥ dem 0.25-fachen Durchmesser der Halbschalen entspricht.

18. Reparaturrohr nach einem der Ansprüche 1 bis 17, **dadurch gekennzeichnet, dass** die Nuten (25,25) im Querschnitt halbkreisförmig oder rechteckig sind.

19. Reparaturrohr nach einem der Ansprüche 1 bis 18, **dadurch gekennzeichnet, dass** die in den Längskanten (17) vorgesehenen Nuten (25) der beiden Halbschalen (13,15) versetzt zueinander angeordnet sind.

20. Reparaturrohr nach einem der Ansprüche 1 bis 19, **dadurch gekennzeichnet, dass** die Dichtungsmittel mittels Verbindungsmittel lösbar mit den Halbschalen verbunden sind.

21. Reparaturrohr nach Anspruch 20, **dadurch gekennzeichnet, dass** die Dichtungsmittel vorzugsweise Flachdichtungen sind, und dass die Verbindungsmittel an der Rückseite der Flachdichtungen angeformte Zapfen sind, welche in entsprechenden in den Nuten vorgesehenen Löchern oder Aussparungen in der Halbschale einrasten können.

## Claims

1. Repair tube with
- two half shells (13, 15) with a preferably round cross section and the same diameter as well as
- with first sealing means (19) for sealing the meeting borders or longitudinal edges (17) of the half shells (13, 15) when assembled,
- second sealing means (23) which extend transversely to the tube longitudinal axis which are provided at least at a distance from the tube ends (27, 31) at least on the envelope inner surface (21) of the half shells (13, 15) and abut on the first sealing means (19) for sealing the longitudinal edges (17) or are connected to them,
**characterized in**
**that** a sleeve half shell (29) which forms a tube-sleeve transition (30) is moulded at a first end (27) of the half shells (13, 15), sleeve half shell the inner diameter of which corresponds substantially to the outer diameter of the other second end (33) of the half shells (13, 15), that first and second sealing means (19, 23) are provided in the area of the sleeve half shell (29) and that second sealing means (19, 23) are provided at a distance before and after the tube-sleeve transition (30).

2. Repair tube according to claim 1, **characterized in that** the first and second sealing means (19, 23) are a preferably one-piece sealing profile.

3. Repair tube according to claim 1, **characterized in that** the sealing means (19, 23) are inserted into a groove (25, 26) in the longitudinal edges (17) or on the envelope innter surface (21).

4. Repair tube according to claim 2 or 3, **characterized in that** the sealing profile has a round, oval or rectangular cross section.

5. Repair tube according to any of the claims 1 to 4, **characterized in that** the longitudinal eges (17) of the half shells (13, 15) are widened at least partially to a flange surface (35) in the area of the first sealing means (19).

6. Repair tube according to any of the claims 1 to 5, **characterized in that** connection means (37) are provided for connecting the two half shells (13, 15) at least on one side on the repair tube (11) or are integrated therewith.

7. Repair tube according to claim 6, **characterized in that** the connection means (37) are moulded on both sides on the half shells (13, 15) opposite to each other and at a distance from each other in the tube longitudinal direction.

8. Repair tube according to claim 6 or 7, **characterized in that** the connection means are catching means or snap-in connections (37).

9. Repair tube according to claim 8, **characterized in that** the snap-in connection (37) is formed of a peg (41) with an undercut (45) moulded on the one half shell (13) and of a recess (39) or a snap-in edge, moulded on the other half shell (15), into which the peg (41) can snap-in preferably with a prestress.

10. Repair tube according to claim 9, **characterized in that** the undercut (45) of the pegs (41) is oriented inwards.

11. Repair tube according to any of the claims 8 to 10, **characterized in that** the snap-in means are configured or moulded on webs (43) radially projecting from the half shells (13, 15).

12. Repair tube according to any of the claims 8 to 11, **characterized in that** connection means (37) are provided in the tube longitudinal direction at least in the area of the second sealing means (23).

13. Repair tube according to any of the claims 1 to 12, **characterized in that** the two half shells (13, 15) of the repair tube are held together by at least one hinge (49).

14. Repair tube according to claim 13, **characterized in that** the hinge (49) is formed by two webs (43) radially projecting from the half shells (13, 15), the ends of which are connected with each other.

15. Repair tube according to claim 12 or 13, **characterized in that** the hinge-sided connection means, for example snaps or catching means, for connecting the half shells (13, 15) are integrated in the hinges (49).

16. Repair tube according to any of the claims 1 to 15, **characterized in that** the swivelling axis (51) defined by the hinge extends axially to the tube longitudinal axis and at a distance from the longitudinal edges of the half shells (13, 15).

17. Repair tube according to any of the claims 1 to 16, **characterized in that** the distance between the swivelling axis (51) and the half shell borders is bigger than or equal to 0,1 times the diameter of the half shells, preferably to 0,2 times the diameter of the half shells and most preferably to 0,25 times the diameter of the half shells.

18. Repair tube according to any of the claims 1 to 17, **characterized in that** the grooves (25, 25) have a semicircular or rectangular cross section.

19. Repair tube according to any of the claims 1 to 18, **characterized in that** the grooves (25) provided in the longitudinal edges (17) of both half shells (13, 15) are placed offset relative to each other.

20. Repair tube according to any of the claims 1 to 19, **characterized in that** the sealing means are removably connected to the half shells by connection means.

21. Repair tube according to claim 20, **characterized in that** the sealing means are preferably flat sealings and that the connection means are pegs moulded on the back side of the flat sealings which can snap-in in corresponding holes provided in the grooves or recesses in the half shell.

## Revendications

1. Tuyau de réparation avec
- deux demi-coques (13, 15) de section de préférence ronde de même diamètre ainsi
- qu'avec des premiers moyens d'étanchéité (19) pour l'étanchéité des bords ou des arêtes longitudinales (17) des demi-coques (13, 15) qui se touchent, lorsque celles-ci sont assemblées,
- des seconds moyens d'étanchéité (23) qui s'étendent transversalement par rapport à l'axe longitudinal du tuyau qui sont prévus au moins espacées des extrémités de tuyau (27, 31) au moins sur la face intérieure de l'enveloppe (21) des demi-coques (13, 15) et qui aboutent aux premiers moyens d'étanchéité (19) pour l'étanchéité des arêtes longitudinales (17) ou qui sont reliés à celles-ci,
**caractérisé en ce**
**qu'**une demi-coque de manchon (29) qui forme une transition tuyau/manchon (30) est moulée à une première extrémité (27), demi-coque de manchon dont le diamètre intérieur correspond substantiellement au diamètre extérieur de l'autre extrémité, la seconde (33) des demi-coques (13, 15), que des premiers et seconds moyens d'étanchéité (19, 23) sont prévus dans la zone de la demi-coque de manchon (29) et que des seconds moyens d'étanchéité (19, 23) sont prévus espacés avant et après la transition tuyau/manchon (30).

2. Tuyau de réparation selon la revendication 1, **caractérisé en ce que** les premiers moyens d'étanchéité et les seconds moyens d'étanchéité (19, 23) sont un profilé d'étanchéité de préférence en une pièce.

3. Tuyau de réparation selon la revendication 1, **caractérisé en ce que** les moyens d'étanchéité (19, 23) sont insérés dans une rainure (25, 26) dans les arêtes longitudinales (17) ou sur la face intérieure de l'enveloppe (21).

4. Tuyau de réparation selon la revendication 2 ou 3, **caractérisé en ce que** le profilé d'étanchéité est de section ronde, ovale ou rectangulaire.

5. Tuyau de réparation selon l'une des revendications 1 à 4, **caractérisé en ce que** les arêtes longitudinales (17) des demi-coques (13, 15) sont élargies au moins partiellement en une surface de bride (35) dans la zone des premiers moyens d'étanchéité (19).

6. Tuyau de réparation selon l'une des revendications 1 à 5, **caractérisé en ce que** des moyens de raccordement sont prévus au moins sur un côté sur le tuyau de réparation (11) pour relier les deux demi-coques (13, 15) ou sont intégrés à celui-ci.

7. Tuyau de réparation selon la revendication 6, **caractérisé en ce que** les moyens de raccordement (37) sont moulés des deux côtés sur les demi-coques (13, 15) en étant en face l'un de l'autre et espacés dans le sens longitudinal du tuyau.

8. Tuyau de réparation selon la revendication 6 ou 7, **caractérisé en ce que** les moyens de raccordement sont des moyens d'enclenchement ou des raccords à encliqueter (37).

9. Tuyau de réparation selon la revendication 8, **caractérisé en ce que** le raccord à encliqueter (37) est formé en un tourillon (41) moulé sur l'une des demi-coques (13), tourillon qui présente une contre-dépouille (45) et en un évidement (39) ou une arête d'enclenchement moulée sur l'autre demi-coque (15), arête dans laquelle le tourillon (41) peut s'enclencher de préférence avec une précontrainte.

10. Tuyau de réparation selon la revendication 9, **caractérisé en ce que** la contre-dépouille (45) des tourillons (41) est orientée vers l'intérieur.

11. Tuyau de réparation selon l'une des revendications 8 à 10, **caractérisé en ce que** les moyens d'enclenchement sont configurés ou moulés sur des entretoises (43) qui font saillie radialement des demi-coques (13, 15).

12. Tuyau de réparation selon l'une des revendications 8 à 11, **caractérisé en ce que** des moyens de raccordement (37) sont prévus dans le sens longitudinal du tuyau au moins dans la zone des seconds moyens d'étanchéité (23).

13. Tuyau de réparation selon l'une des revendications 1 à 12, **caractérisé en ce que** les deux demi-coques (13, 15) du tuyau de réparation sont maintenues ensemble par au moins une charnière (49).

14. Tuyau de réparation selon la revendication 13, **caractérisé en ce que** la charnière (49) est formée par deux entretoises (43) qui font saillie radialement des demi-coques (13, 15), entretoises dont les extrémités sont reliées l'une à l'autre.

15. Tuyau de réparation selon la revendication 12 ou 13, **caractérisé en ce que** les moyens de raccordement du côté de la charnière, par exemple des fermetures à encliqueter ou des moyens d'enclenchement, pour relier les demi-coques (13, 15) sont intégrés aux charnières (49).

16. Tuyau de réparation selon l'une des revendications 1 à 15, **caractérisé en ce que** l'axe de pivotement (51) défini par la charnière est dans le sens axial par rapport à l'axe longitudinal du tuyau et est espacé des arêtes longitudinales des demi-coques (13, 15).

17. Tuyau de réparation selon l'une des revendications 1 à 16, **caractérisé en ce que** l'écart entre l'axe de pivotement (51) et les bords des demi-coques est supérieur ou égal à 0,1 fois le diamètre des demi-coques, de préférence à 0,2 fois le diamètre des demi-coques et de manière tout particulièrement préférée est supérieur ou égal à 0,25 fois le diamètre des demi-coques.

18. Tuyau de réparation selon l'une des revendications 1 à 17, **caractérisé en ce que** les rainures (25, 25) sont de section semi-circulaire ou rectangulaire.

19. Tuyau de réparation selon l'une des revendications 1 à 18, **caractérisé en ce que** les rainures (25) prévues dans les arêtes longitudinales (25) des deux demi-coques (13, 15) sont placées en étant décalées l'une par rapport à l'autre.

20. Tuyau de réparation selon l'une des revendications 1 à 19, **caractérisé en ce que** les moyens d'étanchéité sont reliés de manière amovible aux demi-coques par des moyens de raccordement.

21. Tuyau de réparation selon la revendication 20, **caractérisé en ce que** les moyens d'étanchéité sont de préférence des joints plats et que les moyens de raccordement sont des tourillons moulés au dos des joints plats qui peuvent s'enclencher dans des trous correspondants prévue dans les rainures ou dans des réservations dans la demi-coque.
